# EUROPEAN PATENT APPLICATION

(11) **EP 4 707 643 A1**
(43) Date of publication of application: **11.03.2026**
(21) Application number: 25200769.5
(22) Date of filing: 08.09.2025
(51) Int. Cl.: F16H 63/08, F16H 63/32, F16H 63/34, F16H 63/30

(54) **MOTOR VEHICLE WITH AN ENGAGEMENT DEVICE OF A GEARBOX AND A PARKING BREAK DRIVEN BY A SAME ACTUATOR**

(30) Priority: 10.09.2024 IT 202400020146
(71) Applicant: FERRARI S.p.A., 41100 Modena (IT)
(72) Inventor: CAVALLINO, Carlo, 41100 MODENA (IT); FODERARO, Antonio, 41100 MODENA (IT)
(74) Representative: Studio Torta S.p.A.

(57) **Abstract**

A motor vehicle (1) includes a plurality of wheels (2), a propulsion motor (3), and a transmission architecture (4) to transmit the output power of the propulsion motor (3) to the wheels (2) and comprising a drive shaft (6) driven by the output power of the propulsion motor (3), a gearbox (5) having at least one input shaft (7), one output shaft (16), and at least one engagement device (17, 17') operable to engage a relative gear ratio between the input shaft (7) and the output shaft (16), a clutch (21) selectively controllable to connect the drive shaft (6) to the input shaft (7), a drive assembly (22) comprising a rod (23) coupled to the engagement device (17') and an actuator device (24) configured to translate the rod (23) along a straight axis (H) between a first position, where the rod (23) leads the engagement device (17') to engage the gear ratio, and a second position distinct from the first position, a parking brake (25) comprising a first member (26) fixed at one among the input shaft and the output shaft (7, 16), and a second member (27) movable between a locking position, in which the second member (27) cooperates with the first member (26) to lock the first member (26), thereby locking the transmission architecture (4), and a release position, in which the first and second members (26, 27) are spaced apart, characterized in that the drive assembly (22) further comprises a locking mechanism (28) configured to lead the second member (27) into the locking position in response to a translation of the rod (23) into the second position.

## Description

### CROSS-REFERENCE TO RELATED APPLICATIONS

This patent application claims priority from Italian patent application no. 102024000020146 filed on September 10, 2024, the entire disclosure of which is incorporated herein by reference.

### FIELD OF THE ART

The invention concerns a motor vehicle, more in particular provided with a dual-clutch gearbox.

### PRIOR ART

As is known, some motor vehicles with an electric hybrid propulsion apparatus, i.e. provided with an internal combustion engine and at least one electric motor-generator for propulsion, have a dual-clutch gearbox.

Typically, a dual-clutch gearbox includes a secondary shaft or output shaft defining a gearbox output or connected to at least one axle of the motor vehicle, as well as two primary shafts respectively connected to a gearbox input through respective clutches arranged in parallel and defining a dual-clutch.

The two primary shafts respectively carry first and second toothed wheels, which by meshing with corresponding third toothed wheels carried by the secondary shaft determine a first group of gears, normally the even gears, and a second group of gears, normally the odd gears, respectively.

For the engagement of each of the gears, one of the two toothed wheels of the gear forming the gear to be engaged is made rotationally fixed to the relative bearing shaft between the primary shafts and the secondary shaft via an engagement device, for example a synchronizer, while the other of the two toothed wheels is itself configured to be rotationally fixed to the relative bearing shaft between the primary shafts and the secondary shaft.

Usually, the gearbox also includes a safety mechanism to lock the rotation of the secondary shaft, thus defining a parking brake for the motor vehicle.

The safety mechanism includes the mutual engagement of two members, of which a first member is fixed to the secondary shaft and a second member is movable between a locking position, in which it cooperates with the first member so as to prevent its rotation, and a release position, in which the two members are spaced apart.

Therefore, the safety mechanism requires an actuator dedicated to displace the second member selectively between the locking position and the release position.

This constitutes a drawback in general terms of complication of the gearbox and of allocation of the components due to the additional presence of the dedicated actuator.

Therefore, the need to address the drawback set forth above is felt, without giving up a safety locking of the gearbox.

An aim of the invention is to meet the need set forth above, preferably in a simple and repeatable manner.

### DISCLOSURE OF THE INVENTION

The aim is achieved by a motor vehicle as defined in claim 1.

The dependent claims define particular embodiments of the invention.

### BRIEF DESCRIPTION OF THE DRAWINGS

In the following, an embodiment of the invention is described for a better understanding thereof by way of nonlimiting example and with reference to the accompanying drawings in which:
- Figure 1 is a perspective view of a motor vehicle according to the invention;

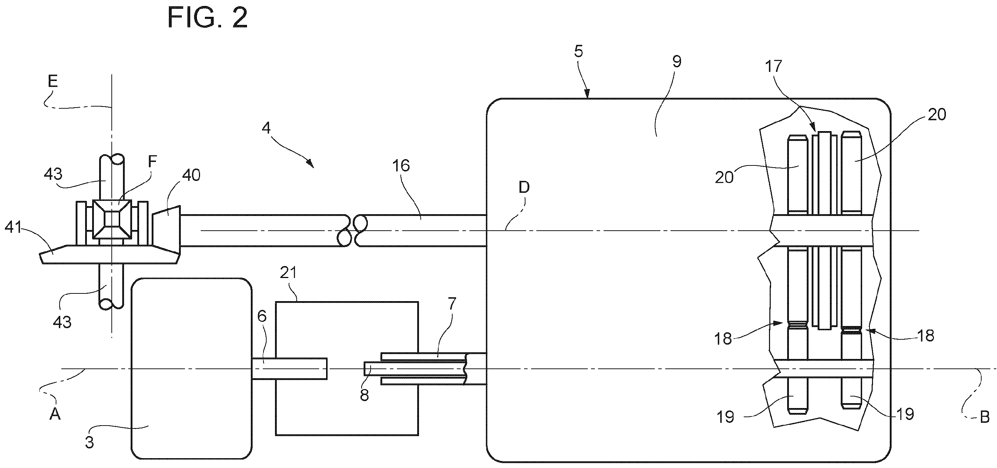

- Figure 2 is a schematic representation of a transmission architecture of the motor vehicle,

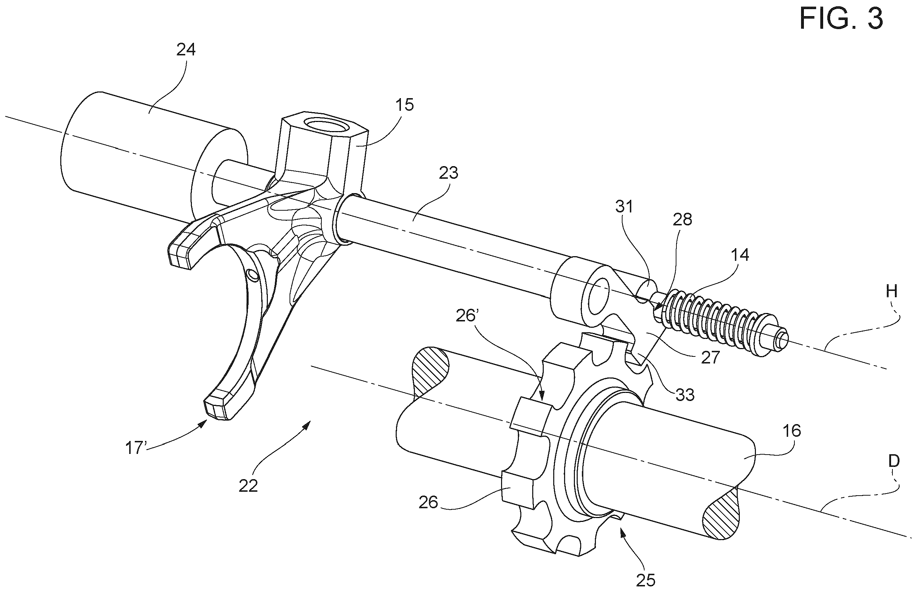

- Figure 3 is a perspective view of a portion of the transmission architecture with an actuator for axially moving a rod carrying an engagement device and a member adapted to actuate a parking brake of the motor vehicle,

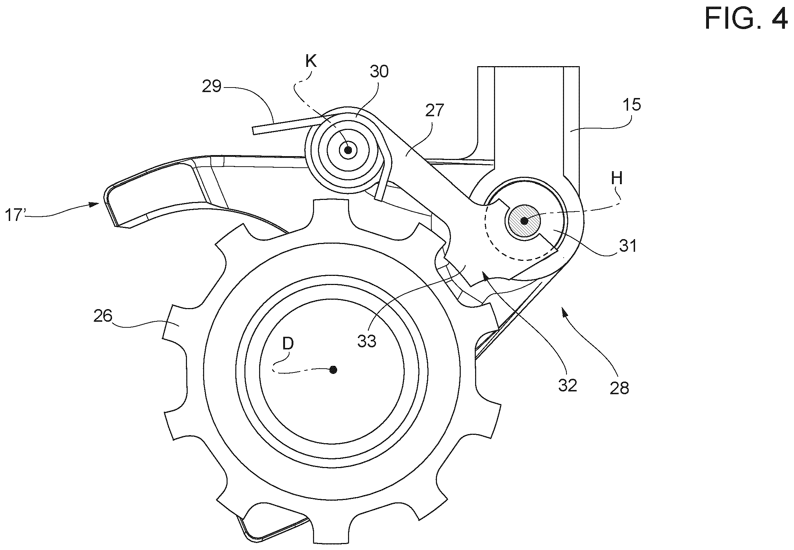

- Figure 4 is a front view, with parts removed for clarity, of the portion of Figure 3, and
- Figures 5-8 are block diagrams representative of side views showing respective positions of the rod of Figure 3.

### EMBODIMENTS OF THE INVENTION

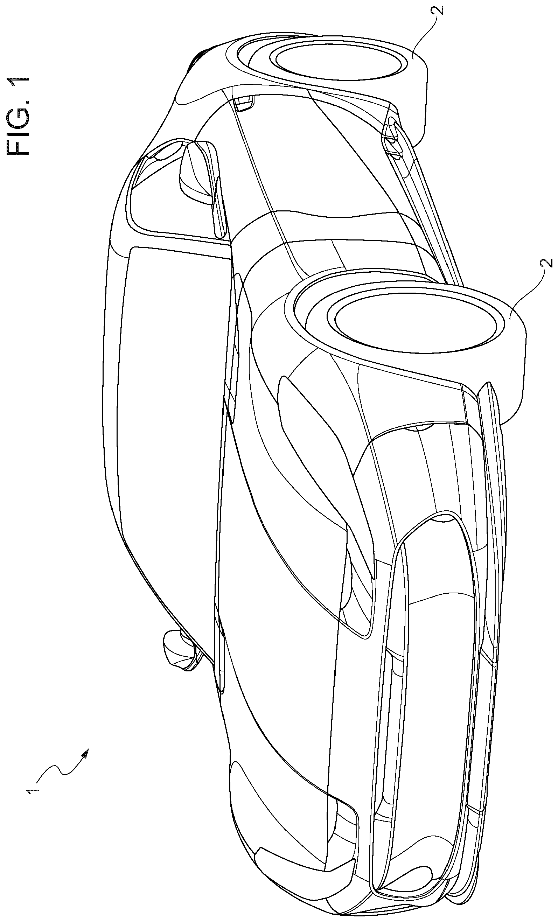

In Figure 1, reference numeral 1 is used to denote, as a whole, a motor vehicle.

The motor vehicle 1 comprises a plurality of wheels 2 (precisely four), of which at least two driving wheels, in particular coupled to each other by means of an axle, for example of known type and not shown, and preferably aligned with each other according to a pitch axis of the motor vehicle 1.

The motor vehicle 1 further comprises a propulsion motor 3, in particular an internal combustion engine, which is configured to provide output power.

The motor vehicle 1 further comprises an apparatus or transmission architecture 4 configured to transmit the output power of the propulsion motor 3 to the wheels 2, in particular the driving wheels.

The transmission architecture 4 comprises a drive shaft 6, for example comprising a crankshaft of the propulsion motor 3. The drive shaft 6 is connected to the propulsion motor 3, i.e. it is driven (in rotation) by the propulsion motor 3 or by its output power. Specifically, the drive shaft 6 extends along an axis A, for example straight.

Furthermore, the transmission architecture 4 comprises a gearbox 5 having at least a first input shaft 7, an output shaft 16, and one or more engagement devices 17 operable to engage respective gear ratios or transmission ratios between the input shaft 7 and the output shaft 16.

In addition, preferably, the gearbox 5 comprises a second input shaft 8, whereby one or more of the engagement devices 17 are operable to engage respective further gear ratios between the input shaft 8 and the output shaft 16.

In particular, the gearbox 5 comprises a casing 9, inside which there are contained the engagement devices 17 and respective portions of the output shaft 16, the input shaft 7 and the input shaft 8, where present.

In greater detail, each of the gear ratios is defined by a gear 18, in turn comprising two toothed wheels 19, 20 (in particular meshing with each other), of which in particular a first wheel is fixed to one of the input shafts 7, 8 or to the output shaft 16, while a second wheel is carried by the output shaft 16 in a rotatable manner if the first wheel is fixed to one of the input shafts 7, 8 or by the latter in a rotatable manner if the first wheel is fixed to the output shaft 16.

The expression "in a rotatable manner" refers here to the fact that the second wheel can rotate freely relative to the bearing shaft among the output shaft 16 and one of the input shafts 7, 8.

More in general, at least one of the two toothed wheels 19, 20, i.e. the second wheel, is carried in a rotatable manner by its bearing shaft, i.e. it can rotate freely relative thereto.

The engagement devices 17 are configured to engage the second wheels to the relative bearing shafts, i.e. they are selectively operable or controllable to fix the second wheels to the relative bearing shafts.

In some cases, even the first wheel could be free to rotate relative to its bearing shaft; here, one of the engagement devices 17 would be selectively operable to fix the first wheel to the relative bearing shaft.

For example, one or more of the engagement devices 17 may be defined by a synchronizer or a dog clutch.

The shaft 7 extends specifically along an axis B (for example straight), in particular parallel and more in particular coincident with the axis A.

Preferably, the shaft 8 is coaxial to the shaft 7, i.e. it also extends along axis B.

The output shaft 16 is connected to the axle or to the wheels 2 (driving ones), in particular via an automotive differential F of the architecture 4, i.e. it is configured to transmit a rotation thereof to the axle or to the wheels 2.

The output shaft 16 extends along an axis D, for example straight, specifically parallel to the axis B.

In particular, the output shaft 16 carries a bevel pinion 40 in a fixed manner relative to the output shaft 16. The pinion 40 directly meshes with a toothed wheel 41 (e.g. a hypoid or bevel wheel) forming a single bevel gear. The differential F has at least one output shaft 43 (in particular two output shafts 43 that are coaxial and extending along opposite directions) extending along a straight axis E arranged orthogonally to the axis D. An outer casing of the differential F can also be integrated to the casing 9. The aspects described in this paragraph are independent of all the rest of the description, so they can be extrapolated arbitrarily to define embodiments relevant to other inventions distinct from the present one.

Furthermore, the gearbox 5 or more generally the transmission architecture 4 comprises a dual-clutch 21 configured or controllable to connect selectively one of the input shafts 7, 8 with the drive shaft 6, so that the shaft connected among the input shafts 7, 8 is driven in rotation by the rotation of the drive shaft 6 or by the output power of the propulsion motor 3.

The dual-clutch 21 is advantageous but optional, so that it could be replaced by a more generic (e.g. single) clutch selectively controllable to connect the drive shaft 6 to one of the input shafts 7, 8, with the other of the input shafts 7, 8 potentially absent.

In more detail, the dual-clutch 21 comprises two distinct clutches (not shown) respectively configured or controllable to connect the input shaft 7 and the input shaft 8 to the drive shaft 6 in an alternative manner.

The transmission architecture 4 further comprises a drive assembly 22 for operating one of the engagement devices 17, in particular indicated hereinafter by the reference numeral 17', i.e. for leading the engagement device 17' to engage the relative gear ratio.

The drive assembly 22 comprises a rod 23 coupled, in particular secured or fixed in a releasable manner, to the engagement device 17' or more precisely to a portion (for example a fork or bracket 15) of the engagement device 17'.

Furthermore, the drive assembly 22 comprises an actuator device 24 configured to translate the rod 23 along a straight axis H between a first or engagement position, in which the engagement device 17' is led by the rod 23 to engage the relative gear ratio, and a second or parking position, distinct from the engagement position, as will become clearer below.

Therefore, the rod 23 is carried by the actuator device 24 in a translating manner along the axis H, in particular parallel to the axis D. A translation of the rod 23 into the engagement position corresponds to an axial displacement of the engagement device 17' into a position in which it engages the relative gear ratio, whereby the rod 23 drags the engagement device 17' during the translation into the engagement position to determine the engagement of the gear ratio via the engagement device 17'.

The actuator device 24 could have an actuation of a totally mechanical nature, for example via a mechanism manually controllable by a driver of the motor vehicle 1, or another type of actuation, for example electric, hydraulic or pneumatic. For example, the actuator device 24 could be controlled by a control unit (not shown), in particular according to a request from the driver, for example provided by the driver via a suitable command coupled to the control unit.

The transmission architecture 4 further comprises a parking brake 25, in turn comprising a member 26 fixed to the output shaft 16 (or to one of the input shafts 7, 8), and a member 27 movable between a locking position, in which the member 27 cooperates with the member 26 to lock the latter and consequently the entire architecture 4, and a release position, in which the members 26, 27 are spaced apart i.e. do not cooperate with each other or are decoupled from each other.

More precisely, the member 26 comprises a grooved sleeve, for example fitted through interference or keyed or welded or made as one piece on the output shaft 16. In the locking position, the member 27 is shaped to engage one of the grooves 26' of the member 26, thereby blocking its movement. The grooved sleeve of the member 26 could for example be defined by a toothed wheel.

In the locking position, as will become clearer from the following, the member 27 is kept locked, i.e. in a fixed position, so that the mutual engagement between the members 26, 27 results in the locking of the member 26.

The drive assembly 22 comprises a locking mechanism 28 configured to lead the member 27 into the locking position in response to a translation of the rod 23 into the parking position. In more detail, the locking mechanism 28 is further configured to also keep the fixed member 27 in the locking position when the rod 23 is in the parking position.

Preferably, the locking mechanism 28 comprises a recall device 29, for example comprising a spring 30 coupled to the member 27, configured to return the member 27 from the locking position to the release position when the rod 23 is removed from the parking position. For example, the spring 30 has a fixed end relative to the member 27 and a fixed end relative to an element of the gearbox 5 fixed relative to the axis H, for example the casing 9.

In greater detail, the locking mechanism 28 comprises an element 31 carried by the rod 23, in particular in a fixed position relative to the rod 23, and a kinematic mechanism 32 configured to transform a movement of the element 31 corresponding to the translation of the rod 23 in the parking position into a movement of the member 27 into the locking position. With the rod 23 in the parking position, the kinematic mechanism 32 is more in detail configured to keep the member 27 in the locking position, in particular against the action of the recall device 29.

The kinematic mechanism 32 can be any type of kinematic mechanism, for example with articulated mechanisms, transmissions with flexible elements, with gears, and the like, but in this case it preferably comprises a cam defined by element 31.

The element 31, i.e. the cam, is configured to cooperate with a follower, preferably defined by the member 27 itself, of the kinematic mechanism 32. The member 27 or more generally the follower is displaced by the element 31 when the rod 23 translates into the parking position, so that the member 27 reaches and in particular remains in the locking position, once the rod 23 is in the parking position.

Therefore, the follower or specifically the member 27 follows the movement of the element 31, associated with or corresponding to the translation of the rod 23 in the parking position, thereby determining or specifically realizing the movement of the member 27 in the locking position.

For example, the element 31 or the cam has a substantially frustoconical shape, i.e. tapered axially (along the axis H). The follower or the member 27 cooperates with the element 31 in contact with the lateral surface of the frustum of cone or the tapered surface of the cam or element 31, whereby it receives a thrust transverse or more precisely orthogonal relative to the axis H.

Specifically, the follower or the member 27 is hinged around an axis K fixed relative to the axis H and more in particular orthogonal to the axis H or to the plane of the axes B, D. The axis H is specifically parallel to the latter plane, although it is not necessarily part of it. In particular, the follower or the member 27 could be hinged to a fixed support relative to the casing 9 or to the axis H.

The member 27 is hook-shaped or has a tooth 33 configured or shaped to engage on one of the grooves of the sleeve of the member 26.

Preferably, the spring 30 is a torsional spring wound around the axis K or configured to react elastically to the arrangement of the member 27 in the locking position with a torque around the axis K, where the elastic reaction of the spring 30 is oriented to return the member 27 into the release position.

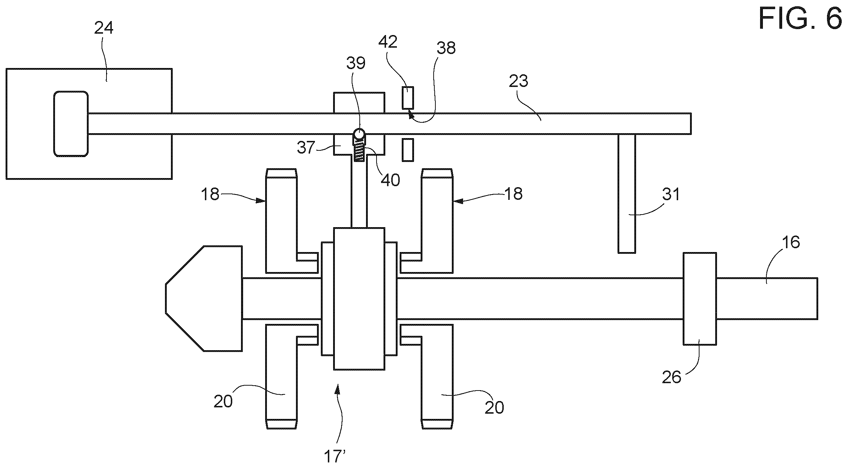

With reference now again to the details of the drive assembly 22, the latter has at least one rest configuration (Figure 6) corresponding to a third position of the rod 23, wherein the gear ratio is disengaged and wherein, in particular, the member 27 is in the rest position.

In other words, in the third position, the rod 23 coupled to the engagement device 17' positions the latter into a neutral position, spaced from the gear 18 defining the gear ratio engageable via the engagement device 17'.

Moreover, independently, with the rod 23 in the third position, the element 31 is in a position whereby the same element 31 is decoupled from the kinematic mechanism 32. In this way, the kinematic mechanism 32 is configured to keep the member 27 in the release position when the element 31 is decoupled from the kinematic mechanism 32, in particular via the recall device 29. Alternatively, the element 31 could be in a position whereby the same element 31 cooperates with the kinematic mechanism 32, i.e. it is coupled thereto, but in which the position of the element 31 corresponds via the kinematic mechanism 32 to an intermediate position of the member 27 distinct from the locking position and possibly coincident with the release position.

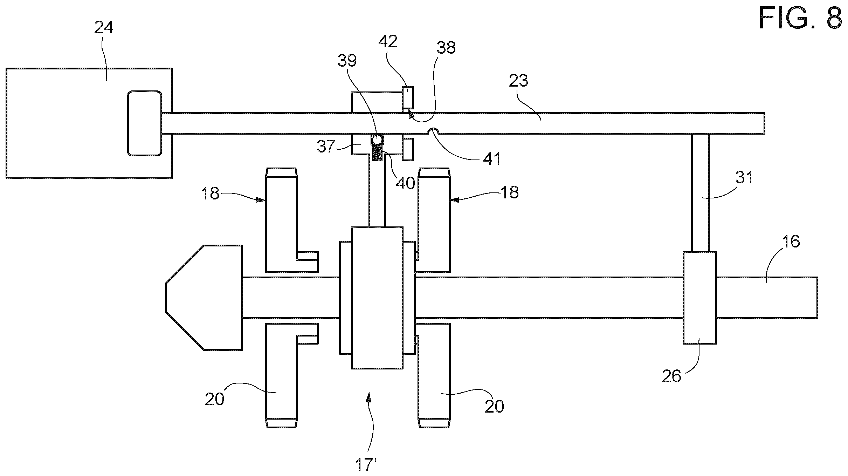

Conversely, in the second position of the rod 23 (Figure 8), the position of the element 31 corresponds via the kinematic mechanism 32 to a positioning of the member 27 into the locking position.

Conveniently, but not necessarily, the drive assembly 22 also comprises a recall device 14, in particular an elastic element, configured to exert on the rod 23 a recall force to return the rod 23 into the third position in response to a displacement of the rod 23 from the third position.

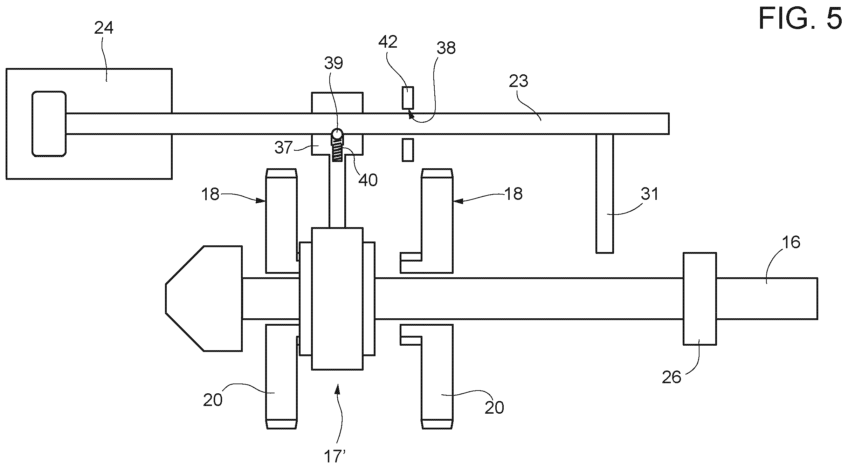

Preferably, the third position may be intermediate according to or along the axis H between the engagement position and the parking position (Figure 5, with the rod in the engagement position). In other words, the rod 23 in the third position translates according to opposite directions along the axis H to reach the engagement position and the parking position, respectively. Here, the rod 23 could be fixed stably, i.e. in a non-dismountable manner (clearly excluding the breakage of components of the architecture 4), to the engagement device 17' or more precisely to a portion thereof.

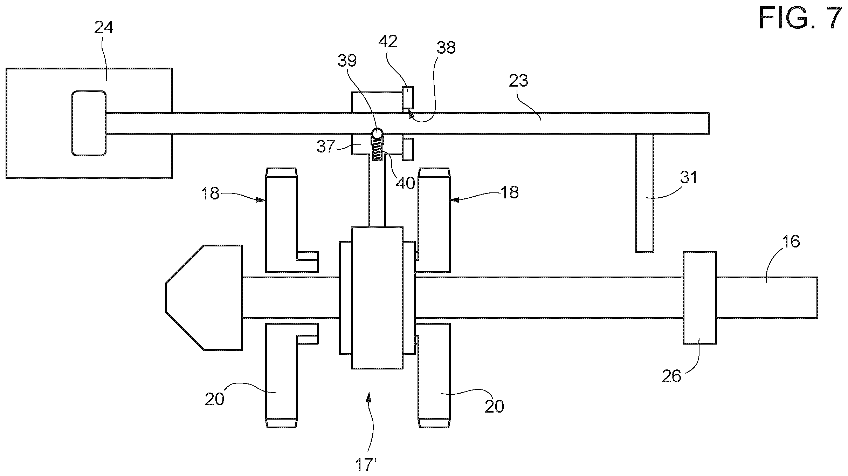

Alternatively or in addition (in the latter case with the engagement device 17' arranged axially between two distinct gears 18 operable to engage each of the two gears 18 selectively), the third position may be the first or the last position of the sequence of positions defined by the engagement position, the parking position and the third position; in other words, the engagement position (Figure 7, with the rod 23 in the engagement position) would be an intermediate position according to or along the axis H between the third position and the parking position. Thus, for example, starting from the third position, the rod 23 is arranged so that it can first reach the engagement position and then the parking position by translating along the axis H according to the same direction.

In this case, although these aspects are not inextricably linked to each other (for example, the preferred aspect described below could also be applicable to the case with a third intermediate position between the engagement position and the parking position), the rod 23 is preferably secured or fixed to the engagement device 17' (or to the portion thereof) in a releasable manner, i.e. such that the rod 23 and the engagement device 17' are releasable with respect to each other under certain specific conditions, in particular during the translation of the rod 23 from the engagement position to the parking position, i.e. when the rod 23 is between the engagement position and the parking position.

On the other hand, in particular, the rod 23 remains fixed to the engagement device 17' (or to the portion thereof) when it translates or is between the third position and the engagement position.

More precisely, specifically, the drive assembly 22 comprises a support element 37, which carries the engagement device 17' (whereby it is coupled to it, for example fixed, in particular to the portion thereof), and a releasable coupling configured to secure the support element 37 to the rod 23.

In this way, the engagement device 17' or the portion thereof is coupled or secured to the rod 23 in a releasable manner via the support element 37 and the releasable coupling.

The releasable coupling is, in fact, releasable in response to a release force on at least one of the support element 37 and the rod 23; the release force must have a modulus or an intensity greater than a threshold, which could even be very small, without loss of generality.

For example, the release force could be directed according to or parallel to the axis H.

The drive assembly 22 comprises a release device 38 configured to exert release force that is sufficient to release the rod 23 from the support element 37 when the rod 23 is in the engagement position in response to a translation of the rod 23 from the engagement position toward the parking position. In this way, the rod 23 is released from the support element 37 and can continue its translation toward the parking position.

Specifically, but not necessarily, the releasable coupling is friction-based (alternatively, for example, the releasable coupling could be a snap coupling).

In particular, the releasable coupling comprises a friction body 39 carried by the support element 37 and placed in contact or in frictional cooperation with the rod 23.

For example, the friction body 39 is carried by the support element 37 via a pushing device 40, in particular a preloaded elastic element (schematically represented in Figures 5 - 8 as a spring), configured to press or push the friction body 39 against the rod 23.

Preferably, the rod 23 has a seat or recess 41 (Figure 8) engaged by the friction body 39 to strengthen the releasable coupling, i.e. to increase the necessary release threshold.

In the embodiment shown, the release device 38 comprises or is defined by a shoulder element 42 fixed axially according to or relative to the axis H (for example fixed to the casing 9) and arranged to stop the support element 37 at the engagement position.

In other words, with the rod 23 and the support element 37 coupled in a releasable manner to each other, the support element 37 meets or abuts with the shoulder member 42 when the rod 23 reaches the engagement position (Figure 7).

In this way, if the rod 23 were led by the device 24 to translate from the engagement position toward the parking position, the shoulder element 42 would prevent the translation of the support element 37 toward the parking position of the rod 23, whereby the shoulder element 42 would exert a reaction, in particular according to or parallel to the axis H, on the support element 37.

When the reaction exceeds or equals the release force, the rod 23 is released from the support element 37, so as to be able to proceed with its translation toward the parking position. The support element 37 and therefore the engagement device 17' remain stationary at the engagement position.

Specifically, the release force due to the reaction of the shoulder element 42 translates into a force on the friction body 39 opposed to the pressure or thrust exerted on the friction body 39 by the thrust device 40, whereby in particular the friction body 39 exits from the seat 41 freeing the rod 23.

Summarizing, the shoulder member 42 exerts the release force as a reaction force in response to translation of the rod from the engagement position toward the parking position.

From the foregoing, the advantages of the motor vehicle 1 according to the invention are evident.

In particular, the single actuator device 24 can be used both to operate the engagement device 17', and to lead the rod 23 into the parking position, thus locking the architecture 4.

This allows to save an actuator dedicated to locking the architecture 4, with a considerable advantage in terms of saved overall dimensions and overall simplicity of the gearbox 5.

Finally, it is clear that modifications and variants can be made to the motor vehicle 1 according to the invention which, however, do not fall outside the scope of protection defined by the claims.

In particular, the number, shape, and arrangement of the components described and shown could be different.

Similarly, the graphical representation of the components is merely schematic for a better understanding of the key aspects of the description, so it is not to be understood as perfectly realistic.

## Claims

1. Motor vehicle (1) comprising a plurality of wheels (2), a propulsion motor (3) configured to provide power output, and a transmission architecture (4) configured to transmit the power output of the propulsion motor (3) to the wheels (2) and comprising
- a drive shaft (6) driven by the power output of the propulsion motor (3),
- a gearbox (5) having at least one input shaft (7), one output shaft (16), and at least one engagement device (17, 17') operable to engage a relative gear ratio between the input shaft (7) and the output shaft (16),
- a clutch (21) selectively controllable to connect the drive shaft (6) to the input shaft (7),
- a drive assembly (22) comprising a rod (23) coupled to the engagement device (17') and an actuator device (24) configured to translate the rod (23) along a straight axis (H) between a first position, where the rod (23) leads the engagement device (17') to engage the gear ratio, and a second position distinct from the first position,
- a parking brake (25) comprising a first member (26) fixed at one among the input shaft and the output shaft (7, 16), and a second member (27) movable between a locking position, in which the second member (27) cooperates with the first member (26) to lock the first member (26), thereby locking the transmission architecture (4), and a release position, in which the first and second members (26, 27) are spaced apart,
**characterized in that** the drive assembly (22) further comprises a locking mechanism (28) configured to lead the second member (27) into the locking position in response to a translation of the rod (23) into the second position.

2. The motor vehicle according to claim 1, wherein the gear ratio is defined by a gear (18) comprising a first and a second toothed wheel (19, 20).

3. The motor vehicle according to claim 2, wherein the first toothed wheel is fixed to one among the input shaft (7) and the output shaft (16), the second wheel being carried by a relative bearing shaft in a rotatable manner relative to the relative bearing shaft, the bearing shaft being defined by the other among the input shaft (7) and the output shaft (16).

4. The motor vehicle according to claim 3, wherein the engagement device (17) is configured to engage the second wheel to the relative bearing shaft.

5. The motor vehicle according to any one of the preceding claims, wherein the engagement device (17) is defined by a synchronizer.

6. The motor vehicle according to any one of the preceding claims, wherein the locking mechanism (28) comprises an element (31) carried by the rod (23) and a kinematic mechanism (32) configured to transform a first movement of said element (31), the first movement being associated with the translation of the rod (23) into the second position, into a second movement of the second member (27) in the locking position.

7. The motor vehicle according to claim 6, wherein said element (31) is fixed relative to the rod (23).

8. The motor vehicle according to claim 7, wherein said element (31) defines a cam configured to cooperate with a follower of the kinematic mechanism (32) when the rod (23) reaches the second position, such that the follower follows the first movement, thereby determining the second movement.

9. The motor vehicle according to claim 8, wherein the follower is defined by the second member (27).

10. The motor vehicle according to any one of the preceding claims, wherein the drive assembly (22) has a rest configuration corresponding to a third position of the rod (23), wherein the gear ratio is disengaged.

11. The motor vehicle according to claim 9, wherein the third position is an intermediate position between the first and the second position according to said straight axis (H).

12. The motor vehicle according to claim 9, wherein the first position is an intermediate position between the third and the second position according to said straight axis (H).

13. The motor vehicle according to claim 12, wherein the drive assembly (22) comprises a support element (37) and a releasable coupling configured to secure the support element (37) to the rod (23) so as to be releasable in response to a release force on at least one of the support element (37) and the rod (23), the release force having a modulus greater than a release threshold, the support element (37) being coupled to the engagement device (17') to carry the engagement device (17'), whereby the engagement device (17') is coupled to the rod (23) in a releasable manner via the support element (37) and the releasable coupling, the drive assembly (22) further comprising a release device (38) configured to exert said release force on the support element (37) when the rod (23) is in the first position in response to a translation of the rod (23) from the first position toward the second position, so as to release the rod (23) from the support element (37).

14. The motor vehicle according to claim 13, wherein the release device (38) further comprises a shoulder element (42) fixed axially according to said straight axis (H) and arranged to stop the support element (37) at the first position of the rod (23), thereby exerting said release force as a reaction force in response to the translation of the rod (23) from the first position toward the second position.

15. The motor vehicle according to claim 13 or 14, wherein the release force is directed according to said straight axis (H) .
